# EUROPÄISCHE PATENTANMELDUNG

(11) **EP 1 342 698 A1**
(43) Veröffentlichungstag der Anmeldung: **10.09.2003**
(21) Anmeldenummer: 02450046.4
(22) Anmeldetag: 05.03.2002
(51) Int. Cl.: C02F 3/12

(54) **Verfahren und Anlage zum Klären von Industrieabwässern**

(71) Anmelder: Matsché, Norbert, Univ. Prof. Dipl.-Ing. Dr., 3400 Klosterneuburg (AT)
(72) Erfinder: Matsché, Norbert, Univ. Prof. Dipl.-Ing. Dr., 3400 Klosterneuburg (AT)
(74) Vertreter: Beer, Manfred, Dipl.-Ing.

(57) **Zusammenfassung**

Zum Klären von Abwässern mit leicht abbaubaren oder leicht adsorbierbaren Inhaltsstoffen, wie Abwässern der Nahrungsmittelindustrie (Molkereien), wird ein Strom kommunaler Abwässer in wenigstens einem Belebungsbecken (8, 9) und gegebenenfalls in wenigstens einem Nachklärbecken (10, 11, 12) behandelt und dabei entstehender Überschussschlamm abgeführt. Wenigstens ein Teil des bei der Klärung kommunaler Abwässer anfallenden Überschussschlammes wird in einem Kontaktbecken (15) mit den Abwässern mit leicht abbaubaren oder adsorbierbaren Inhaltsstoffen unter Durchmischung und unter Sauerstoffzufuhr zum Abbau und zur Adsorption der Inhaltsstoffe der Abwässer zusammengeführt. Die so behandelten Abwässer werden nach dem Abtrennen der Biomasse dem Belebungsbecken (8, 9) zugeführt.

## Beschreibung

Die Erfindung betrifft ein Verfahren zum Klären von Abwässern mit leicht abbaubaren oder adsorbierbaren Inhaltsstoffen, bei dem ein Strom kommunaler Abwässer in wenigstens einem Belebungsbecken und gegebenenfalls in wenigstens einem Nachklärbecken behandelt und dabei entstehender Überschussschlamm abgeführt wird.

Das Klären von Abwässern mit leicht abbaubaren oder adsorbierbaren Inhaltsstoffen, wie Abwässern von Gewerbe- und/oder Industriebetrieben, Abwässern aus Nahrungsmittel verarbeitenden Betrieben, zum Beispiel Molkereien, oder aus biotechnologischen Betrieben bedarf besonderer Aufmerksamkeit.

Beim Einleiten von solchen Abwässern, wie Abwässern der Nahrungsmittelindustrie und anderen Abwässern mit leicht abbaubaren oder adsorbierbaren Inhaltsstoffen, in kommunale Kläranlagen kommt es häufig zur Ausbildung von Schlämmen mit schlechten Absetzeigenschaften (sogenannter "Blähschlamm").

Unter "leicht abbaubaren Inhaltsstoffen" solcher Abwässer werden in erster Linie und beispielsweise Kohlenhydrate (z.B. Zucker), niedrige Fettsäuren (z.B. Essigsäure, Propionsäure), Aminosäuren und Fette verstanden.

"Leicht adsorbierbare Inhaltsstoffe" solcher Abwässer sind in erster Linie und beispielsweise Kohlenhydrate (z.B. Oligosaccharide), Spaltungsprodukte von Eiweißen und Fetten (z.B. Peptone).

Neben Inhaltsstoffen solcher Abwässer, die leicht abbaubar sind, und Inhaltsstoffen derartiger Abwässer, die leicht adsorbierbar sind, gibt es in solchen Abwässern auch Inhaltsstoffe, die je nach den Randbedingungen sowohl abbaubar als auch adsorbierbar sind. Zu solchen sowohl leicht abbaubaren als auch leicht adsorbierbaren Inhaltsstoffen der hier in Betracht gezogenen Abwässer gehören beispielsweise folgende Stoffe: Kohlenhydrate (z.B. Zucker und Oligosaccharide), niedrige Fettsäuren (z.B. Essigsäure, Propionsäure), Aminosäuren, Fette, Spaltungsprodukte von Eiweißen und Fetten (z.B. Peptone).

Das wesentlichste Problem beim Einleiten solcher Abwässer gemeinsam mit kommunalem Abwasser in Kläranlagen, insbesondere in Belebungsbecken ergibt sich durch eine Beeinträchtigung der Schlammqualität. In solchen Abwässern vorhandene Inhaltsstoffe führen erfahrungsgemäß zu einer Erhöhung des Schlammindex im belebten Schlamm. Die in solchen Abwässern enthaltenen leicht abbaubaren oder adsorbierbaren Inhaltsstoffe fördern nämlich das Wachstum von fadenförmigen Bakterien, welche die spezifischen Absetzeigenschaften des belebten Schlammes in Nachklärbecken maßgeblich verschlechtern (Blähschlamm).

Beim Auftreten von Blähschlamm ist insbesondere bei erhöhter hydraulischer Belastung, wie beim Mischwasserzufluss, mit dem Abtreiben von belebtem Schlamm aus der Nachklärung zu rechnen. Dadurch ist nicht nur die Reinigungsleistung der Kläranlage deutlich herabgesetzt, sondern es können in weiterer Folge durch die hohe Sauerstoffzehrung der abgetriebenen Schlammflocken Schäden im Vorfluter wirksam werden, die bis zu Fischsterben führen können. Weiters können sich bei Ableitung der hier betroffenen Abwässer in Ortskanäle Geruchsprobleme ergeben.

Da u.a. der Blähschlamm zu erheblichen Problemen beim Betrieb der Kläranlage führen kann, soll das gemeinsame Einleiten von solchen Abwässern mit leicht abbaubaren und/oder adsorbierbaren Inhaltsstoffen und kommunalen Abwässern in Kläranlagen vermieden werden. Es hat daher auch schon Vorschläge gegeben, solche Abwässer vor dem Einleiten in die Kläranlage vorzubehandeln, was aber je nach Art der Vorbehandlung mit relativ hohen Investitionskosten für die entsprechende Anlage und/oder Betriebskosten dieser Anlage zur Vorbehandlung verbunden ist.

Der Erfindung liegt die Aufgabe zu Grunde, ein Verfahren zum Klären von Abwässern der eingangs genannten Art anzugeben, mit denen diese möglichst problemlos und ökonomisch geklärt werden können.

Gelöst wird diese Aufgabe in erster Linie mit einem Verfahren mit den Merkmalen des Anspruches 1.

Die Erfindung macht sich zu Nutze, daß Überschussschlamm eine Reihe günstiger Eigenschaften hat, die der Reinigung von Abwässern mit leicht abbaubaren oder adsorbierbaren Inhaltsstoffen zu Gute kommen. Die Reinigungswirkung kann über 95% betragen und ist damit sehr hoch. Es wird ein gesicherter Abbau und eine gesicherte Adsorption der Inhaltsstoffe, welche die Absetzeigenschaften des belebten Schlammes in der Kläranlage negativ beeinflussen könnten, erreicht. Die beim Abbau gebildete Biomasse aus dem Abwasser mit leicht abbaubaren oder adsorbierbaren Inhaltsstoffen kann mit dem Überschussschlamm der Gesamtanlage vereinigt werden, so daß sie falls gewünscht, gleichzeitig mit diesem in eine maschinelle Überschussschlammeindickung abgezogen werden kann.

In dem Kontaktbecken, in dem die Abwässer mit leicht abbaubaren und/oder adsorbierbaren Inhaltsstoffen - beispielsweise jenen der weiter oben erläuterten Art - mit Überschussschlamm vereinigt werden, kann in vorteilhafter Weise durch das Ausmaß der Sauerstoffzufuhr gesteuert werden, ob Inhaltsstoffe bevorzugt abgebaut (mehr Sauerstoffzufuhr) oder adsorbiert (weniger Sauerstoffzufuhr) werden. Nicht abgebaute, sondern nur adsorbierte Inhaltsstoffe werden dann in der Faulung abgebaut.

Beispiele für Abwässer mit leicht absorbierbaren und/oder adsorbierbaren Inhaltsstoffen, die nach dem erfindungsgemäßen Verfahren geklärt werden können, sind Abwässer aus Brauereien, Tierkörperverwertungsanstalten, Backhefeerzeugung, Brennereien, Obstverwertung, Papier- und Zellstofffabriken. Diese Abwässer können in wechselnden Anteilen die oben beispielhaft erläuterten "leicht abbauren" und die "leicht adsorbierbaren" Inhaltsstoffe enthalten.

Wenn Übeschussschlamm anschließend beispielsweise zur Gewinnung von Biogas verwendet wird, ergibt sich durch die erfindungsgemäße Klärung von Abwässern mit leicht abbaubaren oder adsorbierbaren Inhaltsstoffen eine noch höher Effizienz mit dieser zusätzlichen Nutzung.

Die Erfindung betrifft auch eine Anlage zum Klären von Abwässern mit leicht abbaubaren oder adsorbierbaren Inhaltsstoffen, mit welcher auch das erfindungsgemäße Verfahren ausgeführt werden kann. Eine solche Anlage mit den Merkmalen des einleitenden Teils von Anspruch 5 ist durch die Merkmale des Anspruches 5 gekennzeichnet.

Vorteilhaft ist, daß bei dem erfindungsgemäßen Verfahren und der erfindungsgemäßen Anlage lediglich einmalige Investitionskosten für die Errichtung eines zusätzlichen Kontaktbeckens für die Abwässer mit leicht abbaubaren oder adsorbierbaren Inhaltsstoffen bzw. eine Adaptierung eines allenfalls bereits vorhandenen Beckens anfallen.

Vorteilhafte Ausführungsformen der Erfindung sind Gegenstand der Unteransprüche.

Nachfolgend wird eine bevorzugte Ausführungsform der Erfindung mit Bezug auf das angeschlossene Fließschema beschrieben.

Kommunales Abwasser wird durch einen Zulauf 1 über einen Rechen 2 und einen Sandgang 3 einem Vorklärbecken 4 zugeführt. Aus dem Vorklärbecken 4 abgezogener Primärschlamm wird über eine Leitung 5 und einen Voreindicker (nicht gezeigt) einer Faulanlage 6 zugeführt.

Kommunales Abwasser gelangt weiter über eine Leitung 7 in ein Belebungsbecken 8 und aus diesem in ein weiteres Belebungsbecken 9 sowie anschließend in Nachklärbecken 10, 11 und 12. Es kann auch nur ein Belebungsbecken 8 und nur ein Nachklärbecken 10 vorgesehen sein oder auch kein Nachklärbecken, wenn im Belebungsbecken ein Membranfilter vorgesehen ist. Von jedem der Nachklärbecken 10, 11 und 12 wird Rücklaufschlamm über eine an jedes Nachklärbecken 10, 11, 12 unmittelbar angeschlossene Rücklaufschlammleitung 13 zum ersten Belebungsbecken 8 geführt.

Abwässer mit leicht abbaubaren oder adsorbierbaren Inhaltsstoffen, beispielsweise Abwässer der eingangs beschriebenen Herkunft und mit den eingangs beschriebenen Inhaltsstoffen, werden über eine Leitung 14 einem Kontaktbecken 15 zugeführt. Dem Kontaktbecken 15 wird über eine Leitung 16, 16a von den Nachklärbecken 10, 11 und 12 stammender Überschussschlamm zugeführt, wobei die Leitung 16, 16a von der Rücklaufschlammleitung 13 abzweigt. Je nach Bedarf kann der von den Nachklärbecken 10, 11 und 12 stammende Überschussschlamm über die Leitung 16, 16a dem Kontaktbecken 15 ganz oder teilweise zugeführt werden, wobei gegebenenfalls der restliche Überschussschlamm über eine Leitung 16b und eine Leitung 17 einer Überschussschlammeindikkung 18 zugeführt wird. Über die Leitung 17 wird das im Kontaktbekken 15 mit Überschussschlamm behandelte, nicht kommunale Abwasser gemeinsam mit dem Überschussschlamm aus dem Kontaktbecken 15 der maschinellen Überschussschlammeindickung 18 zugeführt und anschlieβend in die Faulanlage 6 eingebracht. Trübwasser aus der Überschussschlammeindickung 18 wird über eine Leitung 19 und weiter über die Leitung 7 wieder dem Belebungsbecken 8 zugeführt.

Bei der Faulung in der Faulanlage 6 entstehendes Gas kann beispielsweise zur energetischen Nutzung (z.B. Blockheizkraftwerk) eingesetzt werden. Ausgefaulter Schlamm wird schließlich einer Schlammentwässerung 20 zugeführt, der entwässerte Schlamm entsorgt und das Trübwasser aus der Schlammentwässerung 20 über die Leitung 19 und weiter über die Leitung 7 wieder dem Belebungsbecken 8 zugeführt.

Da bei der Erfindung der Überschussschlamm der kommunalen Kläranlage als Reaktionsmedium für die Behandlung von Abwässern mit leicht abbaubaren oder adsorbierbaren Inhaltsstoffen genutzt werden kann, ergeben sich bei sehr hoher Reinigungsleistung, geringem Blähschlammbildungspotential und relativ geringen Investitionskosten, sehr niedrige Betriebskosten für die Anlage. Zusätzlich kann das bei der Abwasserreinigung gewonnene Biogas ebenso wirtschaftlich genützt werden.

Zusammenfassend kann ein Ausführungsbeispiel der Erfindung wie folgt dargestellt werden:

Zum Klären von Abwässern mit leicht abbaubaren oder leicht adsorbierbaren Inhaltsstoffen, wie Abwässern der Nahrungsmittelindustrie (Molkereien), wird ein Strom kommunaler Abwässer in wenigstens einem Belebungsbecken 8, 9 und gegebenenfalls in wenigstens einem Nachklärbecken 10, 11, 12 behandelt und dabei entstehender Überschussschlamm abgeführt. Wenigstens ein Teil des bei der Klärung kommunaler Abwässer anfallenden Überschussschlammes wird in einem Kontaktbecken 15 mit den Abwässern mit leicht abbaubaren oder adsorbierbaren Inhaltsstoffen unter Durchmischung und unter Sauerstoffzufuhr zum Abbau und zur Adsorption der Inhaltsstoffe der Abwässer zusammengeführt. Die so behandelten Abwässer werden nach dem Abtrennen der Biomasse dem Belebungsbecken 8, 9 zugeführt.

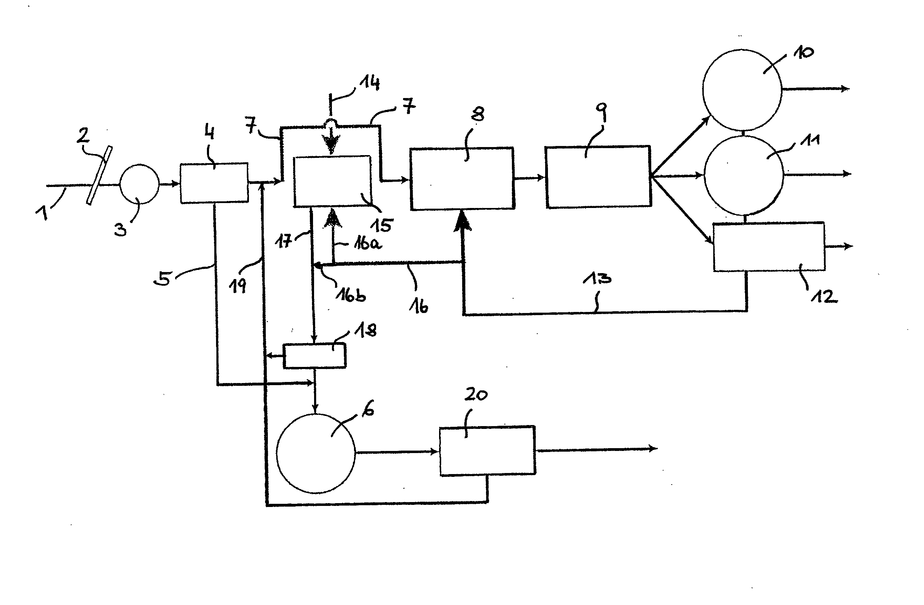

## Patentansprüche

1. Verfahren zum Klären von Abwässern mit leicht abbaubaren und/oder adsorbierbaren Inhaltsstoffen, bei dem ein Strom kommunaler Abwässer in wenigstens einem Belebungsbecken (8, 9) und gegebenenfalls in wenigstens einem Nachklärbecken (10, 11, 12) behandelt und dabei entstehender Überschussschlamm abgeführt wird, **dadurch gekennzeichnet, daß** wenigstens ein Teil des bei der Klärung kommunaler Abwässer anfallenden Überschussschlammes in einem Kontaktbecken (15) mit den Abwässern mit leicht abbaubaren und/oder adsorbierbaren Inhaltsstoffen unter Durchmischung und gegebenenfalls unter Sauerstoffzufuhr zum Abbau bzw. zur Adsorption der Inhaltsstoffe der Abwässer zusammengeführt wird und daß die so behandelten Abwässer nach dem Abtrennen der Biomasse dem Belebungsbecken (8, 9) zugeführt werden.

2. Verfahren nach Anspruch 1, **dadurch gekennzeichnet, daß** der Überschussschlamm des Kontaktbeckens (15) und/oder des Belebungs- (8, 9) und gegebenenfalls Nachklärbeckens (10, 11, 12) einer Überschussschlammeindickung (18) unterzogen wird und daß das bei der Überschussschlammeindickung (18) entstehende Trübwasser (19) dem Belebungsbecken (8, 9) zugeführt wird.

3. Verfahren nach Anspruch 2, **dadurch gekennzeichnet, daß** der Überschussschlamm aus der Überschussschlammeindickung (18) einem Faulprozess und anschließend gegebenenfalls einer Entwässerung unterzogen wird.

4. Verfahren nach Anspruch 2, **dadurch gekennzeichnet, daß** der Überschussschlamm aus der Überschussschlammeindickung (18) gegebenenfalls nach Entwässerung einer Verbrennung zugeführt wird.

5. Anlage zum Klären von Abwässern mit leicht abbaubaren oder adsorbierbaren Inhaltsstoffen, mit einem Zulauf (1) für kommunale Abwässer zu wenigstens einem Belebungsbecken (8, 9) und gegebenenfalls wenigstens einem Nachklärbecken (10, 11, 12) und mit einer zu dem Belebungsbecken (8, 9) führenden Rücklaufschlammleitung (13), **gekennzeichnet durch** ein Kontaktbekken (15), an das sowohl eine Zuführleitung (14) für Abwässer mit leicht abbaubaren oder adsorbierbaren Inhaltsstoffen als auch eine Zuführleitung (16a) für bei der Klärung kommunaler Abwässer anfallendem Überschussschlamm angeschlossen sind, **durch** eine Verbindungsleitung (17, 19, 7), die einerseits mit dem Kontaktbecken (15) für Abwässer mit leicht abbaubaren oder adsorbierbaren Inhaltsstoffen und anderseits mit dem Belebungsbecken (8, 9) verbunden ist, und **durch** eine Überschussschlammeindickung (18) in der Verbindungsleitung (17, 19, 7).

6. Anlage nach Anspruch 5, **gekennzeichnet durch** eine Überschussschlammeindickung (18), **durch** die der gesamte Überschussschlamm geführt wird.

7. Anlage nach Anspruch 6, **dadurch gekennzeichnet, daß** die Überschussschlammeindickung (18) mit dem Belebungsbecken (8, 9) verbunden ist.

8. Anlage nach Anspruch 7, **dadurch gekennzeichnet, daß** an die Überschussschlammeindickung (18) eine Faulanlage (6) oder Verbrennungsanlage angeschlossen ist.
